# EUROPÄISCHE PATENTANMELDUNG

(11) **EP 3 913 314 A1**
(43) Veröffentlichungstag der Anmeldung: **24.11.2021**
(21) Anmeldenummer: 21170075.2
(22) Anmeldetag: 23.04.2021
(51) Int. Cl.: F41A 33/02, F41H 13/00

(54) **TRAININGSVORRICHTUNG MIT LASERGESTÜTZTER WAFFE**

(30) Priorität: 19.05.2020 DE 102020113463
(71) Anmelder: Simgun GmbH, 6840 Götzis (AT)
(72) Erfinder: Riedesser, Patrick, 6842 Koblach (AT)
(74) Vertreter: Riebling, Peter

(57) **Zusammenfassung**

Trainingsvorrichtung (1) mit lasergestützter Waffe bestehend aus einer Zentraleinheit (2), mindestens einer Empfangseinheit (8), einer Lasereinheit (9), sowie mindestens einem personengetragenen, mit Reizstrom (43) bestrombaren Pad (9), wobei die Lasereinheit (9) eines ersten Trainierenden (11) an einer ersten Waffe (27) angeordnet ist und ein Lasersignal (28) in Richtung einer Empfangseinheit (8) eines zweiten Trainierenden (12) aussendet, wobei bei einem Erkennen des Lasersignals (28) durch die Empfangseinheit (8) dies von der Zentraleinheit (2) als Treffer gewertet wird, und die Zentraleinheit (2) mindestens einen Stromimpuls an das mindestens eine Pad (13) sendet, wobei bei einem erkannten Treffer das Pad (13) einen wellenartig variierenden Reizstrom (43) abgibt, welcher beim Trainierenden einen muskulär kontrahierenden Schmerz bewirkt.

## Beschreibung

Die Erfindung betrifft eine Trainingsvorrichtung mit einer lasergestützten Waffe nach dem Oberbegriff des Patentanspruches 1.

Bei einer Trainingsvorrichtung mit einer lasergestützten Waffe handelt es sich um eine realistische Schusswaffensimulation (Duellsimulation), welche beispielsweise bei einem taktischen Training eingesetzt wird. Die Simulation dient zur Ausbildung und Übung eines Polizisten, eines Soldaten oder einer Person, welche im Sicherheitsdienst arbeitet. Selbstverständlich kann die Trainingsvorrichtung auch im Hobbybereich oder im privaten Umfeld eingesetzt werden. Dort ist das Spiel als Laser Tag bekannt, wobei die Benutzer Indoor oder Outdoor eine realitätsnahe Gefechtssituation nachspielen.

Mit der DE 41 08 632 A1 wird bereits ein lasergestützter Waffenwirkungssimulator offenbart, welcher aus einem Körpergurt mit einem Empfänger, einer Waffe mit einem Lasersender und einer Elektronik-Empfangseinheit besteht. Bei der vorliegenden Ausführungsform wird ein Trainingspartner mit einem Laserstrahl einer lasergestützten Waffe getroffen, wobei die Empfangseinheit den Laserstrahl empfängt und den Treffer auf einer LCD-Anzeige anzeigt. Nachteil bei dieser Ausführungsform ist, dass der Trainierende nicht wirklich am eigenen Körper erfährt, ob er von dem Laserstrahl des Gegners getroffen wurde, da die Empfangseinheit lediglich die Anzahl der Treffer zusammenzählt und anzeigt.

Mit der Druckschrift EP 2 649 401 B1 wird eine Steuervorrichtung zum Training einer Belastung durch elektrische Impulse offenbart. Die dort beschriebene Steuerungsvorrichtung besteht aus einem Kontrollmodul und einer separaten Aktivierungsvorrichtung, welche ein Aktivierungssignal erzeugt, wenn ein Trainierender von einer elektrischen Impulsvorrichtung getroffen wurde. Der Trainierende trägt hierfür eine Weste, welche bei einem Treffer einen elektrischen Schock dem Trainierenden zuführt. Das Weiteren umfasst die Aktivierungsvorrichtung ein Kontrollmodul, welches mit einem Prozessor und einem Speicher ausgestattet ist, wobei auf dem Modul verschiedene Schockkriterien hinterlegt sind, die der Trainierende für sein Training auswählen bzw. anpassen kann. Der elektrische Schock wird über einen gummiartigen Gürtel auf den Hüftbereich (Gürtelbereich) des Trägers übertragen. Dies ist jedoch nur ein kleiner Bereich des menschlichen Körpers, so dass hierdurch kein realitätsnahes Szenario wiedergegeben werden kann. Wird zum Beispiel der Benutzer an der Schulter getroffen, erfährt er ausschließlich einen Schmerz im Hüftbereich.

Darüber hinaus handelt es sich bei den elektrischen Schocks um einzelne Impulse, welche mit hoher Spannung auf den Benutzer abgegeben werden. Durch die hohe Spannung wird lediglich Strom durch den Körper geführt, wobei ausgehend von einer Gürtelelektrode der Hochvoltimpuls in den Körper des Benutzers eingeleitet wird und an einer anderen Stelle wieder ausgeleitet wird. Es findet somit nur ein Durchfließen des Körpers statt. Zwar wird der Benutzer mit einzelnen Impulsen kontrahiert, jedoch besteht zwischen den Impulsen einzelne Pausen. Dadurch kann sich der Benutzer den Programmablauf verinnerlichen. Insbesondere erholt sich der Benutzer in den Pausen zwischen den einzelnen Impulsen wieder schnell, was nicht der Realität entspricht.

Mit der US 7,872,849 B2 wird ein Lasertrainingsgerät offenbart. Der Benutzer trägt hierbei eine Weste, welche mit einer Empfangseinheit und einer Elektroschockvorrichtung ausgestattet ist. Empfängt die Empfangseinheit einen Laserstrahl, so wird ein Elektroschock auf den Benutzer erzeugt. Bei dem Elektroschock handelt es sich um einzelne periodisch wiederholende Impulse mit hoher Spannung. Auch hier besteht der Nachteil, dass der Benutzer sich an die Abfolge der einzelnen Impulse gewöhnen kann und damit gezielt in den Pausen zwischen den Impulsen wieder agieren kann. Darüber hinaus werden die Impulse ausgehend von der Weste an fixe Punkte an den Körper des Trägers übertragen. Der Träger gewöhnt sich relativ schnell an dieses Schmerzszenario und kann sich auf den Schmerz an dieser Körperstelle einstellen.

Bei dem Stand der Technik fand nur eine Kontraktion des Benutzers mit einem kurzzeitigen Hochvoltimpuls statt, so dass es in diesem Bereich der Körperstelle sogar zu Verbrennungen der Haut gekommen ist. Es hat somit nicht nur der kontrahierte Muskel geschmerzt, sondern es wurde auch die Haut gereizt bzw. gerötet.

Wesentlicher Nachteil bei den Ausführungsformen gemäß dem Stand der Technik ist, dass der Fokus ausschließlich auf die Vermittlung von Schmerz auf den Träger der Vorrichtung (Trainierenden) gelegt wird. Zwar erfährt der jeweilige Benutzer einen kurzzeitigen, elektrischen Schock, wenn er getroffen wurde, jedoch erholt er sich schnell von diesem Schockimpuls. Darüber hinaus wird kein realitätsnahes Verwundungsmodell unter veränderbaren Bedingungen sowie das Einschließen des Verwundungsverlaufs simuliert. Des Weiteren wird der elektrische Schock nicht im Bereich der jeweiligen Trefferzone ausgegeben, sondern nur dort wo die jeweiligen Elektrodenvorhanden sind.

Aufgabe der vorliegenden Erfindung ist es ein realistischeres Verletzungsszenario bei dem Trainierenden wiederzugeben.

Die Aufgabe wird durch die wesentlichen Merkmale des Anspruches 1 gelöst.

Die erfindungsgemäße Ausführungsform weist eine Vorrichtung zum Erzeugen einer Elektro-Muskel-Stimulation auf, welche durch elektrische Muskelkontraktion die Verletzung und den damit verbundenen Schmerz simuliert.
Wesentliches Merkmal ist, dass die Trainingsvorrichtung mindestens ein Pad aufweist, welches bei einem erkannten Treffer einen wellenartig variierenden Reizstrom abgibt, welcher beim Trainierenden einen muskulär kontrahierenden Schmerz bewirkt.

Bei der erfindungsgemäßen Ausführungsform wird somit ein nicht-impulsartiger, wellenartig variierender Reizstrom an das Pad abgegeben, wodurch die dort befindlichen Muskeln dauerhaft kontrahiert werden. Bei dem Reizstrom handelt es sich somit um einen fortbestehenden, andauernden Reizstrom. Dies bedeutet, dass über eine bestimmte Zeitspanne die Stromzufuhr nicht unterbrochen wird, sondern ein permanenter Reizstrom in unregelmäßigen Wellen und Stärken über das Pad an den Anwender abgegeben wird.
Im Gegensatz hierzu wurden bei den Ausführungsform des Standes der Technik lediglich einzelne Impulse mit Unterbrechungen an das Pad abgegeben.

Unter dem Begriff Reizstrom wird ein Gleichstrom oder (niederfrequente) Wechselströme zur Muskelstimulation verstanden. Die Stärke und Dauer des Reizstrom bzw. der Impulse lassen sich durch einen vorgegebenen Simulationsmodus bestimmen. Insbesondere werden plötzliche starke Impulse als störend bis unangenehm empfunden, was einem Schmerz einer realen Schussverletzung entspricht.

Die erfindungsgemäße Ausführungsform hat damit den Vorteil, dass der anhaltende Reizstrom relativ realitätsnahe ein Verletzungsszenario wiederspiegelt, da bei einer Schussverletzung ein andauernder, bzw. fortbestehender Schmerz vorhanden ist. Durch die unterschiedlichen Spannungen wird der Schmerz auch mit unterschiedlichen Höhen und Tiefen wiedergegeben. Ein solcher Schmerz wird beispielsweise als stechender oder dumpfer Schmerz empfunden.

Des Weiteren ist bei der erfindungsgemäßen Trainingsvorrichtung ein Speicher für mehrere unterschiedliche Simulationsmodi vorhanden, wobei nach jedem Treffer über eine bestimmte Zeitspanne ein variierender Reizstrom-Impuls mit unterschiedlichen Spannungen an den Benutzer abgeben wird, so dass die einzelnen Muskeln kontrahiert werden und dadurch der Trainierende einen langanhaltenden Schmerz bzw. Muskelkrampf erfährt.

Die Programme auf dem Speicher unterscheiden sich und werden in Abhängigkeit der eingehenden Daten von dem Controller der Zentraleinheit gewählt. Die Auswahl des jeweiligen Programms erfolgt beispielsweise je nachdem wie oft der Trainierende getroffen wurde. Ein weiteres Kriterium ist wo der Treffer am Körper, z.B. Brust, Rücken, Arm oder Bein festgestellt wurde. Wird beispielsweise nur ein Treffer am Arm festgestellt, so wird ein Programm ausgewählt, welches einen Schmerz mit einer geringeren Intensität ausgibt. Erfolgt jedoch ein Treffer im Brust- oder Rückenbereich, so wird ein Programm gewählt, welches einen Schmerz mit einer höheren Intensität ausgibt. Dies entspricht der Realität, denn Schussverletzungen im Brust- oder Rückenbereich sind deutlich schmerzintensiver, als Schussverletzungen am Arm.

Auch eine nicht letale Schussverletzung, mit der dazu gehörenden körperlichen Beeinträchtigung kann mit der erfindungsgemäßen Trainingsvorrichtung simuliert werden. Wie intensiv dieser Schmerzimpuls sein soll, kann von dem Trainierenden individuelle eingestellt werden.

Es ist mit der erfindungsgemäßen Ausführungsform möglich, auch über einen längeren Zeitraum einzelne, unterschiedliche Schmerzszenarien wiederzugeben, wobei der Verbraucher beispielsweise nach einer gewissen Zeit einen dumpferen Schmerz wiederfährt, was durch die unterschiedlichen Spannungen (Voltzahlen) widergespiegelt wird. So hört bei der erfindungsgemäßen Ausführungsform die Kontrahierung nicht auf, sondern ist stets präsent, was einem realen Verletzungsszenario entspricht.

Die Trainingsvorrichtung besteht aus einer Zentraleinheit (Body-Central-Unit), einer Empfangseinheit (z.B. Head-Unit), sowie einer Lasereinheit (Laser-Unit).

Die Zentraleinheit beinhaltet den Controller, welcher die Daten aus der Empfangseinheit und der Lasereinheit verarbeitet. Die Zentraleinheit weist zusätzlich einen Speicher auf, welcher geeignet ist die verschiedenen (Schock-) Programme zu speichern bzw. zu verarbeiten. Bevorzugt ist die Zentraleinheit in einem Körpergurt oder eine Weste angeordnet.
Zusätzlich kann die Zentraleinheit weitere Vorrichtungen, wie z.B. ein Licht- , Sound- oder Vibrationsmodul aufweisen.

Mit der Empfangseinheit wird das Lasersignal einer Lasereinheit feststellt und als Treffer gewertet. Die Empfangseinheit befindet sich beispielsweise im Bereich des Oberkörpers des Trainierenden. Eine weitere Empfangseinheit kann an einem Helm oder eine Mütze angeordnet sein. Die Verbindung zwischen der Empfangseinheit und der Zentraleneinheit erfolgt über eine Kabel- oder Funkverbindung. Die Helm-Empfangseinheit detektiert einen Kopftreffer bei einem Trefferwinkel von 360 Grad. Ein Kopftreffer wird durch Aufleuchten einer LED angezeigt. Dadurch kann der Trainierende unterscheiden, ob er einen Gegner am Kopf oder am Körper getroffen hat.

Bei einer weiteren bevorzugten Ausführungsform ist im Bereich des linken Arms, rechten Arms, linken Beins, rechten Beins, sowie am Oberkörper vorne, als auch am Rücken mindestens eine Empfangseinheit angeordnet, welche einen Treffer jeweils in diesem Bereich detektiert. Gleichzeitig sind in diesen Bereichen jeweils Pads angeordnet, welche mit der Zentraleinheit verbunden sind und von dieser separat angesteuert werden können. Empfängt nun beispielsweise die Empfangseinheit des linken Arms ein Lasersignal, so wird dieses Signal an die Zentraleinheit weitergeleitet, welche dann das Pad des linken Arms ansteuert. Der Trainierende erfährt damit nur in diesem Bereich, d.h. nur im linken Arm einen "Schmerz", in dem die Muskeln des linken Arms kontrahiert werden. Dadurch können sehr realitätsnah bestimmte Verwundungsfälle abgebildet werden. Insbesondere kann nur in dem Bereich ein Schmerz erzeugt werden, indem auch der Treffer festgestellt wurde.

Die Lasereinheit lässt sich mit jeder beliebigen Waffe kombinieren und ist bevorzugt als Infrarotlaser ausgebildet. Dadurch werden eine hohe Präzision und eine Reichweite von bis zu 1.000 Meter erreicht. Des Weiteren kann die Lasereinheit mit einem Knalldetektor kombiniert werden, welcher den Schuss der Waffe detektiert und einen realistischen Knall erzeugt.

Bei bevorzugten Ausführungsform beginnt die Simulation mit dem ersten Treffer mit der lasergestützten Waffe. Der Simulationsmodus dauert zunächst beispielsweise zwei Minuten an und entspricht einer nicht linearen Impulsabfolge. Am Ende des Zyklus setzt ein gleichbleibender, starker Impuls zur Signalisierung der Neutralisierung für 3 Sekunden ein. Bei nur einem Treffer ist die maximale Verwundungsdauer 10 Minuten, danach tritt automatisch eine Neutralisierung ein. Bei mehreren Treffern reduziert sich die verbleibende Lebenszeit jeweils pro Treffer um beispielsweise 50%. Der festgelegte Zyklus der Impulsabfolge ändert sich pro Treffer, wobei die Zeit bis zur Neutralisierung reduziert wird und die Spannung erhöht wird. Bei einem weiteren Treffer wird aber der Trefferimpuls in den Impulszyklus eingeschoben.
Nach dem ersten Treffer nimmt nach einer gewissen Zeit der Schmerz ab, was sich durch eine Reduzierung der Spannung und eine Reduzierung der Impulszahl wiedergegeben wird. Entscheidend ist, dass bei einem erneuten Treffer der Schmerz durch eine Erhöhung des Impulses und einer Erhöhung der Spannung wiedergegeben wird, wobei der abgespeicherte Simulationsmodus sich wiederholt. Dadurch kann ein realitätsnaher Simulationsmodus eines Schmerzes widergegeben werden. Im Gegensatz hierzu wurde beim Stand der Technik ausschließlich an einer Stelle des Körpers ein gleichbleibender, kurzzeitiger Hochvoltimpuls in den Körper eingeleitet, was jedoch nicht den realen Schmerzen bei einer Schussverletzung entspricht.

Die Trainingsvorrichtung weist eine Zentraleinheit auf, wobei mindestens ein Pad mit der Zentraleinheit verbunden ist.

Die Pads sind bevorzugt als EMS-Pads ausgebildet. EMS bedeutet Elektro-Muskel-Stimulation und bewirkt eine Stimulation der Muskeln. Durch die Pads fließen bioelektrische Impulse, welche einzelne Muskelgruppen stimulieren. Wesentlicher Vorteil bei der Verwendung von einzelnen Pads ist, dass diese an bestimmten Körperstellen, wie z.B. Arm, Rücken, Bauch oder an einem Bein angebracht werden können und dadurch eine gezielte Kontrahierung der Muskel an dieser Körperstelle bewirkt wird. Das EMS-Pad ist beispielsweise mit einer oder zwei Elektroden ausgestattet, welche die Impulse der elektrischen Muskelstimulation an den Körper des Trainierenden weitergegeben.

Der EMS-Pad besteht beispielsweise aus Silikongummi und ist sehr dünn und flexibel. Um das Pad an der jeweiligen Körperstelle anzuordnen kann hierfür auf der Oberfläche des Pads ein Gel-Film aufgebracht werden, wodurch das Pad auf der Haut des Trägers haftet und der Kontaktwiderstand zwischen Haut und Elektrode verringert wird. Die Pads können ferner auch eine selbstklebende Oberfläche aufweisen, mit welcher die Pads an der Haut des Trainierenden anhaften.

Bei einer weiteren bevorzugten Ausführungsform können die Pads eine transkutane elektrische Nervenstimulation (TENS) ausführen.
Durch die Anordnung von einzelnen Pads an einzelnen Körperstellen ist es möglich verschiedene Trefferszenarien am Körper abzubilden. Wird beispielsweise der Benutzer am Arm getroffen, so wird dies von der Zentraleinheit erkannt und das dort befindliche Pad mit elektrischen Impulsen angesteuert. Der Benutzer erfährt dann einen Schmerz in seinem Arm, welcher sich ggf. über weitere Teilbereiche des Körpers erstreckt.

Bei der erfindungsgemäßen Ausführungsform werden Pads eingesetzt, welche bevorzugt einen Niedervoltimpuls an den Benutzer abgeben. Aufgrund des Niedervoltimpulses werden ausschließlich die Muskeln kontrahiert, so dass dadurch einer Muskelanspannung, bzw. eine Art Verkrampfung des Muskels erreicht wird. Dies entspricht einer realen Verletzung, da auch hier bei einer Schussverletzung der Benutzer sich aufgrund des Schmerzes krümmt, und die Muskeln zusammenzieht. So werden beispielsweise ein Niedervoltimpuls in Höhe von 60 Volt und maximal 100 Milliampere auf den Körper ausgeübt.

Bei einer weiteren bevorzugten Ausführungsform weist die Trainingsvorrichtung mehrere Kanäle auf, um eine Vielzahl an Pads anzuschließen. So kann beispielsweise jede Gliedmaße des Körpers mit mindestens zwei Pads ausgestattet werden, so dass bei einem Treffer des rechten Oberschenkels auf der Vorder- und Rückseite ein Schmerz auftritt.

Die Erfindung ist jedoch nicht auf die Anordnung von Pads beschränkt. Bei einer weiteren bevorzugten Ausführungsform können die Elektroden für die Stimulation des einzelnen Muskels innerhalb eines Bekleidungsstücks, wie beispielsweise eines Ganzkörperanzuges, einer Oberbekleidung, einer Weste, einer Manschette oder einem Shirt angeordnet sein. Die Verwendung einer Oberbekleidung hat den Vorteil, dass mehrere Elektroden gleichzeitig angezogen werden können.

Bei einer weiteren bevorzugten Ausführungsform weist das Pad mindestens einen zusätzlichen Sensor auf, mit welchem die Herzfrequenz des Trainierenden gemessen wird. Die Zentraleinheit und das Pad sind zusammen als ein Herzfrequenzmessgerät ausgebildet, welches die Anzahl der Herzschläge pro Zeitintervall misst. Das Pad kann hierzu an einer beliebigen Stelle des Körpers des Trainierenden, beispielsweise an der Brust oder am Arm mit einem Armband angeordnet sein.

Mithilfe der ermittelten Herzfrequenz können die unterschiedlichen Belastungsbereiche, wie z.B. aerober Ausdauerbereich (Fettverbrennung), anaerober Ausdauerbereich, Entwicklungsbereich, wettkampfspezifische Ausdauer, Maximalbelastung und der Stresslevel festgestellt werden. Auf Basis dieser Daten kann dann ein weiteres Training durchgeführt werden und die Leistung des einzelnen Trainierenden gezielt verbessert werden.

Bei einer weiteren bevorzugten Ausführungsform weist die erfindungsgemäße Trainingsvorrichtung einen Beschleunigungssensor (G-Sensor) auf, welcher die Bewegung des Trainierenden erfasst. Bei dem G-Sensor handelt es sich beispielsweise um einen Drei-Achsen-Sensor, welcher eine Bewegung des Trainierenden erfasst und dieses Signal an die Trainingsvorrichtung weitergibt.

Wesentlicher Vorteil bei der Verwendung eines Beschleunigungssensors ist, dass ein noch besseres Verletzungsszenario dargestellt werden kann. Wird zum Beispiel der Trainierende von der lasergestützten Waffe getroffen, so erhält er Impulse von dem EMS-Pad, welche eine zusätzliche Muskelkontraktion bewirken. Die Kontraktion kann so hoch sein, dass sich der Trainierende auf den Boden legen muss. Der Beschleunigungssensor stellt nun fest, ob sich der "verwundete" Trainierende weiterhin bewegt. Bei einer Bewegung wird der Impuls erhöht. Dies entspricht der Realität, da eine Bewegung bei einer Schussverletzung ebenfalls zu einem erhöhten Schmerz führt. Ist keine Bewegung feststellbar, so wird der Impuls der Trainingsvorrichtung reduziert, so dass eine Art Erholungsphase eintritt.

Nach dem ersten Treffer startet der Controller den Simulationsmodus, wobei gleichzeitig die Daten des Beschleunigungssensors einfließen. Anhand der Daten aus von der Empfangseinheit und dem Beschleunigungssensor entscheidet der Controller, welche Elektroden mit welcher Spannung und mit welchem Impuls beaufschlagt werden. In Abhängigkeit von der Bewegung des Benutzers wird dann die Spannung bzw. die Impulse erhöht oder wieder verringert. Der Controller stellt damit fest, ob der Trainierende sich weiterbewegt. Wenn z.B. der Trainierende nach dem Treffer weiterrennt und wird der Impuls und damit der Schmerz realitätsnah erhöht. Sobald sich der Trainierende ausruht, wird der Impuls und die Spannung reduziert, wodurch der Muskel nicht mehr so stark kontrahiert wird.

Mit der erfindungsgemäßen Ausführungsform ist es erstmals möglich, einen noch realeren Trainingsmodus zu erreichen, da aus dem Stand der Technik bisher nicht bekannt war, ob der Trainierende weiterhin rennt und gleichzeitig einen gleichbleibenden Schmerz wiederfährt, oder ob der Trainierende sich hingesetzt hat und den Schmerz beispielsweise im Sitzen wiederfährt. So kann mit der erfindungsgemäßen Ausführungsform viel besser ein Stresslevel abgebildet werden, da der Verwundete bei einer weiteren Bewegung einen zusätzlichen bzw. erhöhten Schmerz durch eine höhere Spannung wiederfährt.

Bevorzugt wirkt ständig d.h. dauerhaft ein Impuls auf den Verwundeten abgegeben, was bei dem Stand der Technik nicht umgesetzt wurde, da hier nur einzelne Impulse mit gleichbleibender Frequenz auf den Verwundeten abgegeben wurden.

Ein weiteres, beispielhaftes Szenario ist, wenn der bereits getroffene Trainierende auf eine Rettungsbahre gehoben wird. Dies stellt eine Bewegung dar, welche von dem Beschleunigungssensor erfasst wird, wodurch die Trainingsvorrichtung einen zusätzlichen Schmerzimpuls an den Benutzer abgibt.

Der Beschleunigungssensor (G-Sensor) bewirkt somit eine sofortige Schmerzreizveränderung, wenn sich der Verwundete bewegt. Dabei wird die gerade durchlaufende Muskelkontraktion direkt erhöht, und zwar solange, bis der Verwundete wieder zur Ruhe kommt. Je nach Bewegung und Intensität der Bewegung werden der Realität ähnelnde, höhere Schmerzimpulse ausgelöst.

Die erfindungsgemäße Trainingsvorrichtung kann mit einer Basisstation kombiniert werden, welche in permanenter Funkverbindung mit den jeweiligen Zentraleneinheiten der Trainierenden steht. Die Basisstation empfängt alle Ereignisse (Treffer, Kills, usw.), die während eines Trainings mit dem erzielt wurden. Diese Daten werden über die Computersoftware entsprechend dargestellt. Daraus wird eine Rangliste mit diversen Statistiken erzeugt. Zusätzlich können weitere Einstellungen über die Basisstation vorgenommen werden. So können beispielsweise die Arte des Schmerzprogramms oder die Anzahl an Schüsse eingestellt werden. Die Basisstation wird per USB mit dem Computer verbunden und stellt eine Funkkommunikation zwischen dem Computer und den einzelnen Einsatzkräften her.

Unter einem Benutzer wird eine Person, Teilnehmer bzw. ein Trainierender verstanden, welcher an dieser Simulationsübung teilnimmt. Die Begriffe Benutzer, Person und Trainierender sind gleichbedeutend anzusehen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematische Darstellung einer Trainingseinheit
- Figur 2:: schematische Darstellung der Zentraleinheit
- Figur 3:: Rehabilitationseinheit (Medic-Device)
- Figur 4:: schematische Darstellung der Intensität nach einem erfolgten Treffer
- Figur 5:: Darstellung von mehreren Treffern und der Lebensenergie
- Figur 6:: schematische Darstellung eines Pads

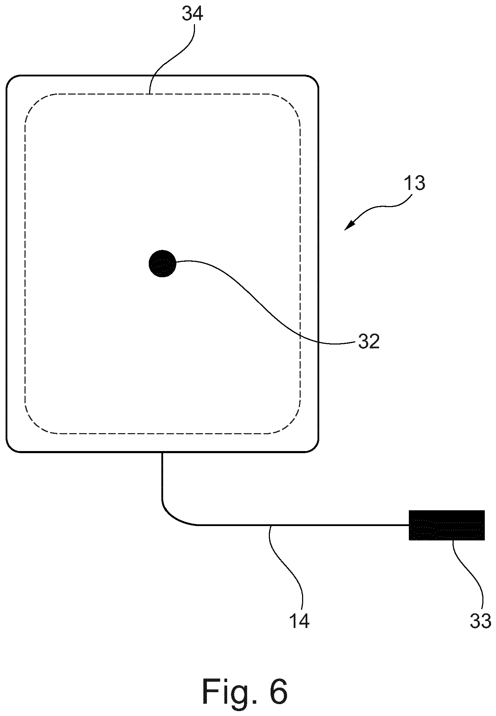

- Figur 6:: verschiedene Darstellungen der Pads am Oberkörper eines Trainierenden

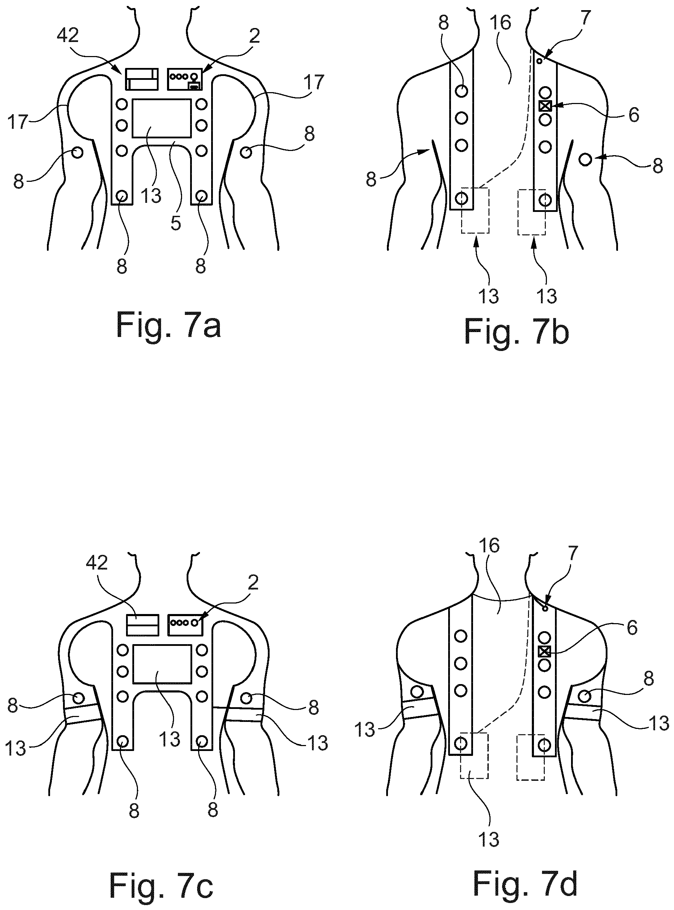

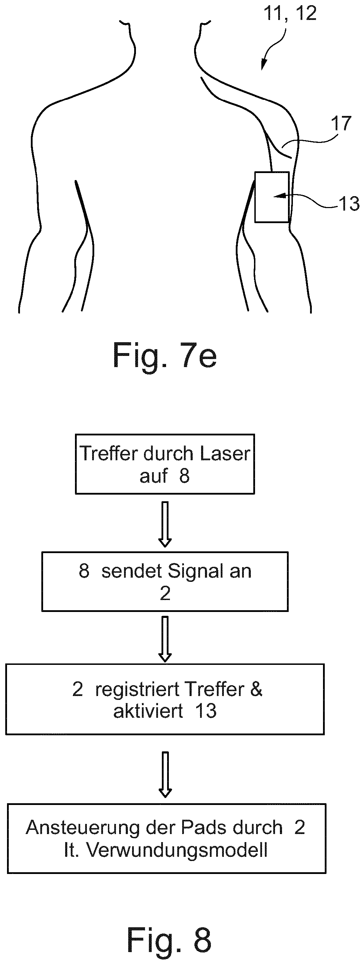

- Figur 7:: Ablaufdiagramm eines Trefferszenarios
- Figur 8:: Darstellung des Simulationsprogramms

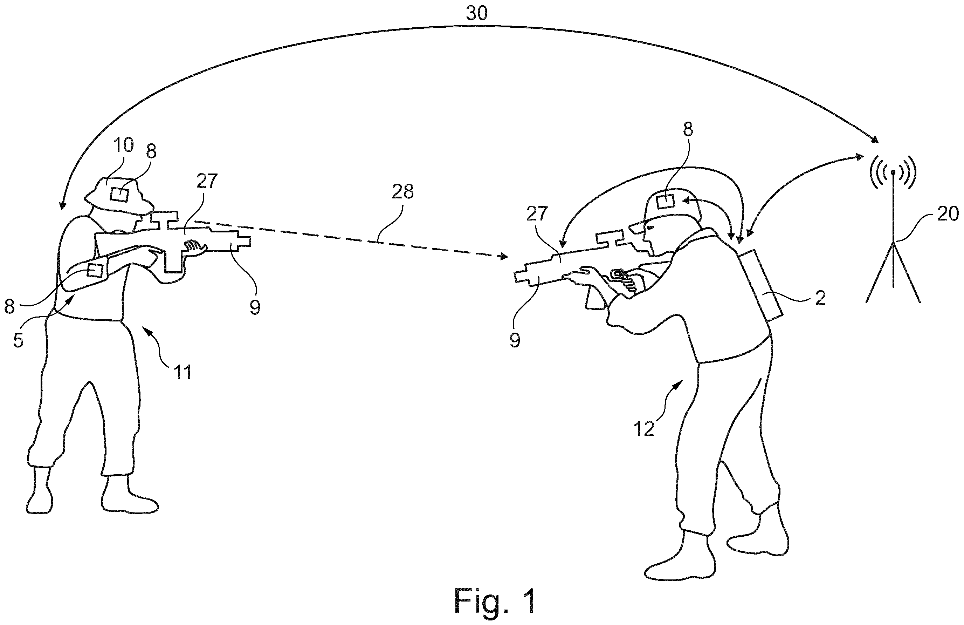

Mit der Figur 1 wird eine Trainingseinheit mit der Trainingsvorrichtung 1 mit einem ersten Trainierenden 11 von beispielsweise einem Team A und einem zweiten Trainierenden 12 von beispielsweise einem Team B gezeigt. Die Trainingsvorrichtung 1 besteht aus einer Zentraleinheit 2, einer Empfangseinheit 8, einer Lasereinheit 9 und mindestens einem Pad.

Beide Trainierende 11,12 tragen jeweils eine Waffe 27 mit einer Lasereinheit 9. Die Lasereinheit 9 ist als Infrarot-Laser ausgebildet, welcher eine Reichweite von bis zu 1000m aufweist. Bei der Waffe 27 handelt es sich um eine Trainingswaffe, wie z.B. eine Bluegun-Waffe oder eine Imitiationswaffe. Selbstverständlich ist es auch möglich, dass als Waffe 27 eine echte Waffe verwendet wird, welche jedoch keine scharfe Munition, sondern Trainingsmunition enthält. Der Trainierende 11, 12 kann somit mit seiner eigenen Waffe 27 trainieren, mit welcher er normalerweise seinen Dienst, als Soldat oder Polizist ausübt.

Die Lasereinheit 9 wird auf die Waffe 27 gesteckt bzw. mit dieser lösbar verbunden. Ein Knalldetektor an der Lasereinheit 9 detektiert den Schuss der Waffe 27 und löst den Laser aus.

Gemäß der Figur 1 gibt der erste Trainierende 11 mit der Lasereinheit 9 ein Lasersignal 28 in Richtung des zweiten Trainierenden 12 ab. Die Empfangseinheit 8 des zweiten Trainierenden 12 empfängt (bei einem korrekten Treffer) das Lasersignal 28 und gibt die Daten an die Zentraleinheit 2 weiter.

Die Zentraleinheit 2 ist bevorzugt als eine Einheit ausgebildet und beinhaltet einen Controller 3 und einen Speicher 29. Bevorzugt ist die Zentraleinheit 2 an einer Weste 5 oder an einem Gurt 4 angeordnet. Die Zentraleinheit 2 weist mehrere Anschlüsse (z.B. wireless, wired, bluethoot) für die einzelnen Empfangseinheiten 8, sowie mehrere Anschlüsse für die einzelnen Pads 13 auf. Bevorzugt ist der Beschleunigungssensor 22 in der Zentraleinheit 2 angeordnet. Es ist jedoch auch möglich, dass der Beschleunigungssensor 22 als separates Bauteil ausgebildet ist, welche mit der Zentraleinheit 2 über eine Kabelverbindung verbunden ist.

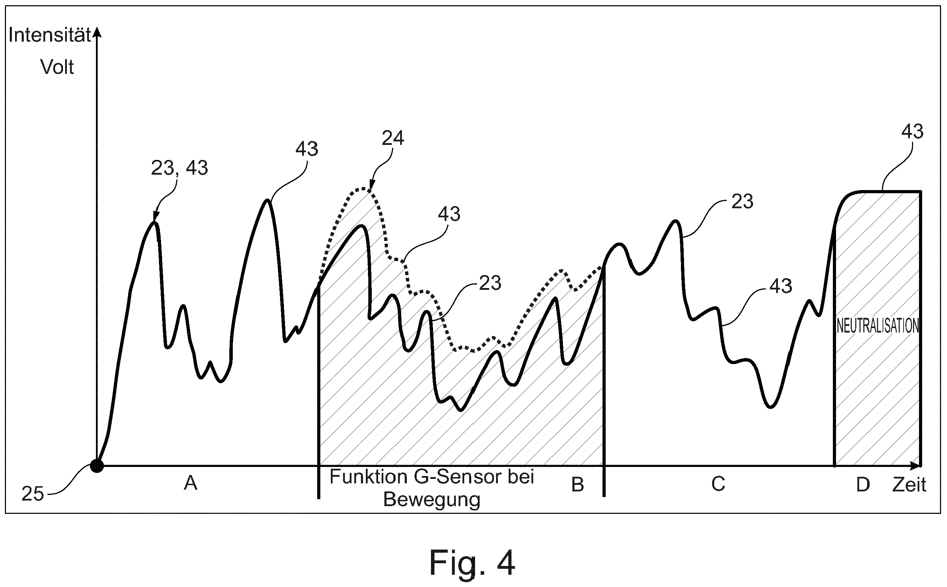

Der Speicher 29 ist als RAM-Speicher ausgebildet und speichert die einzelnen Simulationsmodi. Bei den Simulationsmodi handelt es sich um Programme, welche über eine bestimmte Zeit ablaufen. Diese wird beispielhaft mit der Figur 4 dargestellt.

Der Speicher 29 der Zentraleinheit 2 lässt sich entweder über eine Kabelverbindung oder eine kontaktlose Verbindung, wie z.B. eine Funkverbindung oder Bluetooth-Verbindung beschreiben und auch wieder auslesen.

Der Controller 3 verarbeitet die Daten, welche er von der mindestens einen Empfangseinheit 8 und z.B. dem Beschleunigungssensor 22 erhält. Empfängt eine Empfangseinheit 8 ein Lasersignal 28, so wird diese an die Zentraleinheit weitergegeben, worauf dann der Controller 3 den ersten Simulationsmodus 23 startet, d.h. es wird ein variierender, fortbestehender Stromimpuls an das Pad 13 gesendet, wobei der Impuls ein erstes Verwundungsszenario darstellt. Dies bedeutet, dass eine wechselnde Spannung gezielt an einen oder mehrere Pads 13 abgegeben werden. Das Pad 13 bewirkt eine Muskelkontraktion, was der Trainierende als Unangenehmen bzw. sogar als Schmerz empfindet.

Neben den Simulationsmodi 23, 24 kann der Speicher 29 auch bestimmte Daten 30 speichern, welche er während der Trainingseinheit von z.B. der Empfangseinheit 8, dem Beschleunigungssensor 22 oder dergleichen in die Zentraleinheit 2 eingehen. Die Daten 30 werden an eine Basisstation 20 übertragen, welche diese dann auswertet.

Die Übertragung der Daten 30 ausgehend von der Zentraleinheit 2 an die Basisstation 20 kann beispielsweise permanent mit einer kontaktlosen Datenübertragung erfolgen. Es ist jedoch möglich, dass die Daten 30 nach dem Trainingsende mit einem USB-Stick oder einem anderen Medium auf die Basisstation 20 übertragen werden. Die Basisstation 20 wertet die Daten 30 mit einer geeigneten Software 21 aus und stellt diese z.B. graphisch dar.

Die Software 21 kann beispielsweise folgende Ergebnisse darstellen:
- Erster Treffer innerhalb welches Zeitraums;
- Wie oft der einzelne Trainierende 11, 12 getroffen wurde;
- Wie viele Schüsse d.h. wie viele Lasersignale 28 der gegnerische Trainierende 11, 12 abgegeben hat, bis letztendlich der Trainierende 11, 12 getroffen wurde. Hier findet eine Gegenüberstellung der Lasereinheit 9 des ersten Trainierenden 11 mit der Empfangseinheit 8 des zweiten Trainierenden 12 statt;
- In welchem Bereich des Körpers der Trainerende 11, 12 getroffen wurde;
- Welche Bereiche des Körpers des Trainerenden 11, 12 am meisten getroffen wurden;
- Hat sich der Trainierende 11, 12 nach dem ersten oder zweiten Treffer noch bewegt;
- Auswertung des Pulses der einzelnen Trainierenden 11, 12;
- Wie hoch ist der Stresslevel des einzelnen Trainierenden 11, 12
- Welche Schmerzen d.h. welche Muskelkontraktionen kann der einzelne Trainierende aushalten bzw. weiterhin agieren.

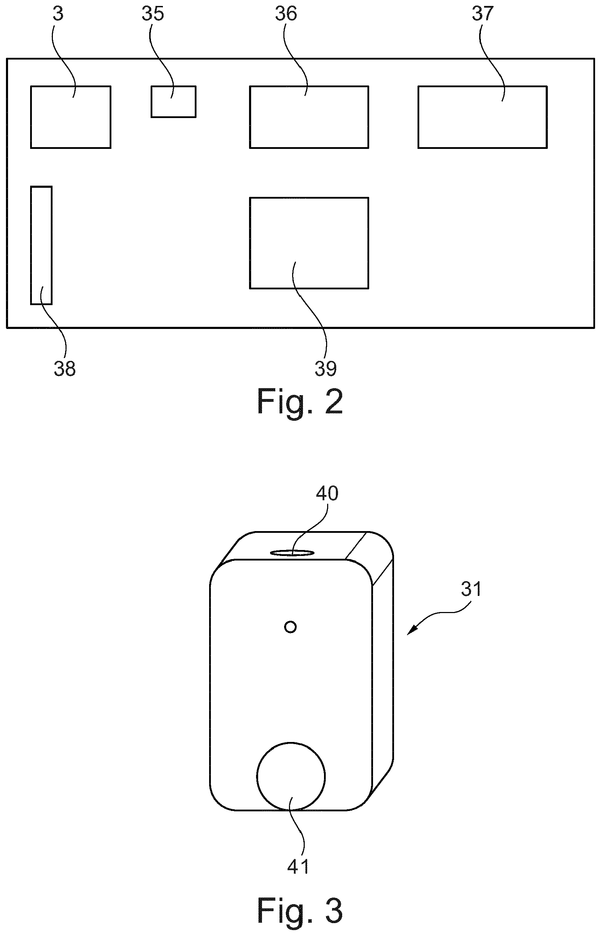

Figur 2 zeigt die Trainingsvorrichtung 2, welche u.a. die folgenden Komponenten bzw. Bauteile aufweist. Einen Controller 2 zur Verarbeitung der eingehenden Daten von den Empfangseinheiten 8, dem Beschleunigungssensor 22, dem Sensor 34 für die Herzfrequenzmessung, sowie dem gespeicherten Programm.

Einen Ein- und Ausschalter 35 für die Aktivierung bzw. Deaktivierung des Systems. Einen Schalter 36, mit welchem die Intensität des ausgegebenen Stromimpuls geregelt werden kann. Ein Funkmodul 37, welches die Daten 30 an die Basisstation 20 überträgt. Ein Speicher 38, welcher beispielsweise als festverbauter, wiederbeschreibbarer Speicher oder als Flash-Speicher ausgebildet ist. Und einen Impulsgeber 39, der die Stromimpulse über die Ausgänge an die einzelnen Pads 13 ausgibt.

Mit der Figur 3 wird ein Rehabilitationsmodul 31 gezeigt. Eine solches Modul wird von einem Trainer eingesetzt, um die Zentraleinheit 2 eines neutralisierten Trainierenden 11, 12 wieder einsatzbereit zu machen. Das Rehabilitationsmodul 31 weist einen Aktivierungssensor 41 auf, welcher ein Signal an die jeweilige Zentraleinheit 2 ausgibt und diese wieder auf den Ursprungszustand zurücksetzt. Der Aktivierungssensor 41 wird über einen Taster 40 aktiviert. Das Rehabilitationsmodul kann auch eine Verwundung zum Teil wieder aufheben. Dies bedeutet, dass der erzeugte Schmerz wieder gedämpft wird, was einem Verbinden und einer Schmerzmittelzugabe im realen Gefecht entspricht.

Mit der Figur 4 wird verschiedene Schmerzprofile 23, 24 veranschaulicht, welche nach einem ersten Treffer ablaufen. Bei einem erkannten Treffer gibt das Pad 13 einen wellenartig variierenden Reizstrom 43 ab, welcher beim Trainierenden einen muskulär kontrahierenden Schmerz bewirkt.

Die Y-Achse zeigt die Intensität, welche in Form des Reizstromes 43 an den Trainierenden 11, 12 abgegeben wird. Mit der X-Achse wir der zeitliche Verlauf dargestellt.

Im Abschnitt A (X-Achse) registriert die Trainingsvorrichtung 1 mit ihrer Empfangseinheit 8 einen ersten Treffer 25, welcher im Ursprung der X- und Y-Achse dargestellt ist. Nach dem Treffer 25 startet die Trainingsvorrichtung 1 das Schmerzprofil 23, welches mit einer steigenden Intensität beginnt. Die steigende Intensität wird durch einen steigenden Reizstrom 43 verursacht.

Entscheidend ist, dass der Reizstrom 43 über die Zeit (X-Achse) fortbesteht. Dies bedeutet, dass der Reizstrom 43 keinerlei Unterbrechungen bzw. Pausen aufweist. Dem Trainierenden 11, 12 wird somit ein ständiger, wechselnder Reizstrom 43 zugeführt, wodurch die jeweiligen Muskeln ständig kontrahiert werden.

Je mehr Zeit nach dem Treffer vergeht, ändert sich das Schmerzprofil automatisch. Ab dem Zeitpunkt des ersten Treffers beginnt ein 10-minütiges Verwundungsszenario in Intervallen von je 2 Minuten in dem die Schmerzintensität differiert.

Im Abschnitt B wird ein zusätzliches Schmerzprofil 24 dargestellt. Das Schmerzprofil 24 weist gegenüber dem normalen Schmerzprofil 23 einen Reizstrom 43 mit einer höheren Intensität auf und hängt mit der Bewegung des Trainierenden 11, 12 zusammen. Bewegt sich der Trainierende 11, 12, so wird dies von dem Beschleunigungssensor 22 erfasst. Die Trainingsvorrichtung 1 erkennt somit eine Bewegung des Trainierenden 11, 12 und erhöht automatisch die Intensität des Reizstromes 43. Dies bedeutet, dass der Reizstrom 43 bei dem Schmerzprofil 24 gegenüber dem normalen Schmerzprofil 23 erhöht ist, so dass die Muskeln des Trainierenden 11, 12 eine erhöhte Kontrahierung erfahren. Es besteht damit ein Zusammenhang zwischen der Bewegung des Trainierenden 11, 12 und der höhe der Intensität bzw. der Höhe des Reizstromes 43.

Im Abschnitt C bewegt sich der Trainierenden 11, 12 nicht, so dass das normale Schmerzprofil 23 mit wechselnder Intensität des Reizstromes 43 abläuft.

Im Abschnitt D findet eine Neutralisation des Trainierenden 11, 12 statt. Dieser Zustand wird durch einen gleichbleibenden Reizstrom 43 wiedergegeben. Die Muskeln des Trainierenden 11, 12 werden somit ständig kontrahiert, was einem Art Muskelkrampf entspricht.

Erhält der Verletzte nur einen Treffer, setzt die zwangsläufige Neutralisierung nach 10 Minuten ein, bei weiteren folgenden Treffern reduziert sich die Zeit bis zur Neutralisation pro Treffer programmgemäß. Die Anzahl der Treffer bis zur Neutralisation ist programmierbar. Hier reduziert sich die Zeit bis zur Neutralisierung realitätsnah. Außerdem gibt es Körperpartien, welche eine Neutralisation schon nach dem ersten Treffer einleiten. Bei sofortiger Neutralisierung setzt auch sofort das Verwundungsszenario "Neutralisation" ein. Dabei wird das normale Verwundungsszenario (10-Minuten) programmgemäß übersprungen.

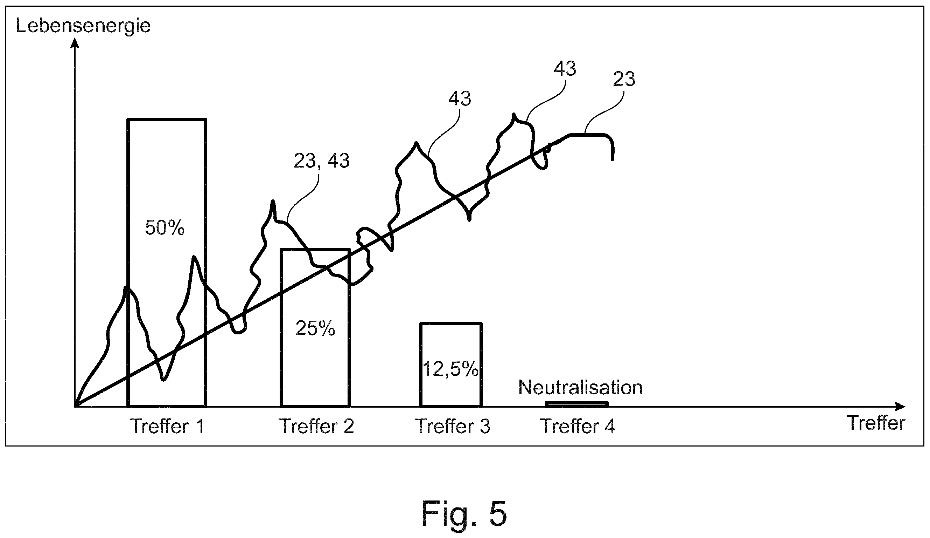

Figur 5 zeigt die abnehmende Lebensenergie bei insgesamt 4 Treffern mit der Lasereinheit 9. Je mehr die Lebensenergie abnimmt, umso höher ist der Stromimpuls, welcher durch das Schmerzprofil 23 in den dazugehörigen Reizstrom 43 dargestellt ist.

Anhand der Figur 5 wird noch eine Verletzungsszenario veranschaulicht. Wird ein Trainierender zum ersten Mal in eine nicht letale Zone getroffen, beträgt die Verwundungsdauer beispielsweise maximal 10 min. Danach tritt automatisch eine Neutralisation ein. Wird der Trainierende während dieser Zeit erneut getroffen, reduziert sich die restliche Verwundungsdauer um 50% und der Reizstrom wird erhöht. Bei jedem weiteren Treffer findet eine 50%ige Reduktion der Lebensenergie statt, wobei der Reizstrom 43 proportional hierzu erhöht wird. Bei dem 4.Treffer erfolgt automatisch eine Neutralisation, wodurch ein gleichbleibender, erhöhter Reizstrom 43 über das bzw. die Pads an den Trainierenden abgebeben wird.

Die Figur 5 zeigt nur beispielhaft, dass nach vier Treffern einer Neutralisation erfolgt. Selbstverständlich kann die Anzahl der Treffer, sowie die Höhe des Reizstromes 43 individuell eingestellt bzw. programmiert werden. Dies erfolgt beispielsweise über die einstellbaren Schmerzprofile 23, 24.

Mit der Figur 6 wird das Pad 13 gezeigt, welches über ein Verbindungskabel 14 mit der Zentraleinheit 2 verbunden ist. Das Pad 13 weist eine Elektrode 32 auf, welche den Stromimpuls an den Trainierenden 11, 12 abgibt. Selbstverständlich kann das Pad 13 auch mehrere Elektroden 32 aufweist.

Des Weiteren kann das Pad 13 auch einen Sensor 34 aufweisen, mit welchem eine Herzfrequenzmessung durchgeführt wird. Die gewonnen Daten werden dann über das Verbindungskabel 14 an die Zentraleinheit 2 übertragen.
Das Pad 13 kann entweder nur zur Übertragung des Stromimpulses mit der Elektrode 32 oder nur zur Messung der Herzfrequenz mit dem Sensor 34 genutzt werden.

Es ist auch möglich, dass das Pad 13 beide Funktionen ausübt. Die Zentraleinheit 2 erkennt, dass beispielsweise momentan kein Stromimpuls über die Elektrode 32 übertragen wird, weil in diesem Körperbereich kein Treffer von der Empfangseinheit 8 festgestellt wurde. In diesem Zeitraum kann somit mit dem Sensor 34 eine Herzfrequenzmessung durchgeführt werden.

Mit den Figuren 7a, 7b, 7c, 7d und 7e werden verschiedene Ausführungsformen der erfindungsgemäßen Trainingsvorrichtung 1 gezeigt. Die Trainingsvorrichtung 1 ist hierbei in einer Weste 7 angeordnet. Die Weste 7 weist zahlreiche Empfangseinheiten 8 auf, welche mit der Zentraleinheit 2 verbunden sind. Weitere Empfangseinheiten 8 befinden sich beispielsweise an den Armen 17. Die Pads 13 sind an unterschiedlichen Bereich des Körpers angeordnet. Die zur Muskelstimulation erforderliche Kombination der Muskelgruppen kann frei gewählt werden.

Gemäß der Figur 7a weist die Trainingsvorrichtung 1 lediglich ein Pad 13 im Brustbereich des Oberkörpers 15 auf. Die Trainingsvorrichtung 2 wird von einem zusätzlichen Akku 42 mit Strom versorgt.

Mit der Figur 7b wird der Trainierende 11, 12 von hinten dargestellt. Auch hier weist die Weste 17 zahlreiche Empfangseinheiten 8 auf, welche das Lasersignal 28 einer gegnerischen Lasereinheit 9 erkennen. Im Bereich des Rücken 16 sind zwei Pads 13 angeordnet, welche dort die einzelnen Muskeln durch einen Stromimpuls kontrahieren.

Figur 7c zeigt den Trainierenden 11, 12 von vorne. An beiden Armen 17 ist sowohl eine Empfangseinheit 8, als auch ein Pad 13 angeordnet. Dadurch ist es möglich, dass bei einem Erkennen eines Treffers in Bereich des Arms 17, auch nur dort das jeweilige Pads 13 mit Strom versorgt wird und dort einen Schmerz verursacht.

Mit der Figur 7d wird der Rücken 16 des Trainierenden 11, 12 gezeigt, wobei die Weste 5 ein Vibrationsmodul 6 aufweist, mit welchem zusätzlich durch eine Vibration ein Treffer dargestellt wird. Darüber hinaus weist die Weste 5 ein Lichtmodul 7 auf, welche den Treffer mit einem Lichtsignal anzeigt.

Figur 7e zeigt die Anordnung eines Pads 13 auf dem Arm 17 des Trainierenden 11, 12. Der Pad 13 ist als Art Manschette ausgebildet und kann somit sicher an dem Oberarm befestigt werden.
Mit der Figur 8 wird der Ablauf nach einem erfolgten Treffer noch einmal dargestellt. Das Lasersignal 28 wird von der Empfangseinheit 8 festgestellt. Die Empfangseinheit 8 sendet ein Signal an die Zentraleinheit 2. Die Zentraleinheit 2 registriert den Treffer und aktiviert ein Programm, wodurch ein bestimmtes Pad 13 einen Stromimpuls erhält.

Die Programme sind zusätzlich individuell vor jedem Training auf die jeweilige Schmerzempfindlichkeit des Anwenders konfigurierbar. Damit wird sichergestellt, dass kein Anwender in seiner Schmerzfähigkeit überfordert wird. Diese individuelle Konfiguration kann nicht von außen oder von Dritten manipuliert werden. Sie wird ausschließlich vom jeweiligen Anwender kontrolliert. Die Trainingsvorrichtung besitzt ferner einen Not-Aus- Schalter, der ergonomisch so angeordnet ist, so dass eine Bedienung rasch sichergestellt wird. Sollte beim Anwender eine Reizüberflutung einsetzen, ist er in der Lage, das System sofort zu deaktivieren.

Die Zentraleinheit 2 steuert alle Funktionen von der individuellen Konfiguration über die Trefferregistrierung durch die entsprechenden Empfangseinheiten 8 am Körper. Zusätzlich wird der Treffer mittels einem Lichtmodul 7 (LED) signalisiert. Die Ansteuerung der Schmerzsimulation der Verwundungsmodelle inklusive aller Szenarien (Treffer, Bewegungen, Verblutungszeit) mit dem möglichen Ergebnis der Neutralisation wird von der Zentraleinheit 2 vorgenommen. Die Zentraleinheit 2 ist das Zentralhirn und Auftraggeber aller Funktionsabläufe, die bei einem oder mehreren Treffern aktiviert werden.

### Zeichnungslegende

1. Trainingsvorrichtung
2. Zentraleinheit
3. Controller
4. Gurt
5. Weste
6. Vibrationsmodul
7. Lichtmodul
8. Empfangseinheit
9. Lasereinheit
10. Helm
11. Trainierender Team A
12. Trainierender Team B
13. Pad
14. Verbindungskabel
15. Oberkörper
16. Rücken
17. Arm
18. Bein
19. Bauch
20. Basisstation
21. Software von 20
22. Beschleunigungssensor (G-Sensor)
23. Simulationsmodus (normal)
24. Simulationsmodus (Bewegung)
25. Treffer Nr.1
26. Treffer Nr.2
27. Waffe
28. Lasersignal
29. Speicher
30. Daten
31. Rehabilitationsmodul
32. Elektrode
33. Stecker
34. Sensor
35. Ein- und Ausschalter
36. Schalter
37. Funkmodul
38. Speicher
39. Impulsgeber
40. Aktivierungssensor
41. Taster
42. Akku
43. Reizstrom

## Patentansprüche

1. Trainingsvorrichtung (1) mit lasergestützter Waffe bestehend aus einer Zentraleinheit (2), mindestens einer Empfangseinheit (8), einer Lasereinheit (9), sowie mindestens einem personengetragenen, mit Reizstrom (43) bestrombaren Pad (9), wobei die Lasereinheit (9) eines ersten Trainierenden (11) an einer ersten Waffe (27) angeordnet ist und ein Lasersignal (28) in Richtung einer Empfangseinheit (8) eines zweiten Trainierenden (12) aussendet, wobei bei einem Erkennen des Lasersignals (28) durch die Empfangseinheit (8) dies von der Zentraleinheit (2) als Treffer gewertet wird, und die Zentraleinheit (2) mindestens einen Stromimpuls an das mindestens eine Pad (13) sendet, **dadurch gekennzeichnet, dass** bei einem erkannten Treffer das Pad (13) einen wellenartig variierenden Reizstrom (43) abgibt, welcher beim Trainierenden einen muskulär kontrahierenden Schmerz bewirkt.

2. Trainingsvorrichtung (1) nach Anspruch 1, **dadurch gekennzeichnet, dass** der wellenartig variierende Reizstrom (43) nicht-impulsartig ist.

3. Trainingsvorrichtung nach Anspruch 1 oder 2, **dadurch gekennzeichnet, dass** die Trainingsvorrichtung (1) einen Beschleunigungssensor (22) aufweist, welcher eine Bewegung des Trainierenden (11, 12) feststellt.

4. Trainingsvorrichtung nach einem der Ansprüche 1 bis 3, **dadurch gekennzeichnet, dass** die Zentraleinheit (2) einen Controller (3) aufweist, welcher den Reizstrom (43) nach einem vorgegebenen Simulationsmodus (23, 24) über einen bestimmten Zeitraum an den Trainierenden (11, 12) abgibt.

5. Trainingsvorrichtung nach Anspruch 4, **dadurch gekennzeichnet, dass** bei bei einer Bewegung des Trainierenden (11, 12) der Controller (2) der Zentraleinheit (2) einen erhöhten Reizstrom nach einem Simulationsprogramm (24) abgibt.

6. Trainingsvorrichtung nach einem der Ansprüche 1 bis 5, **dadurch gekennzeichnet, dass** für bestimmte Körperteile (15-19) des Trainierenden (11, 12) jedem dort angeordneten Pad eine eigene Empfangseinheiten (8) zugeordnet ist.

7. Trainingsvorrichtung nach einem der Ansprüche 1 bis 6, **dadurch gekennzeichnet, dass** jeweils für den Oberkörper (15), den Rücken (16), die Arme (17) und/oder die Beine (18) eigene Pads (9) vorgesehen sind, welche von der Zentraleinheit gezielt angesteuert werden.

8. Trainingsvorrichtung nach einem der Ansprüche 1 bis 7, **dadurch gekennzeichnet, dass** die Zentraleinheit (2) mehrere Anschlüsse für mehrere Pads (9) aufweist, wobei die Verbindung entweder kontaktlos oder kabelgebunden ist.

9. Trainingsvorrichtung nach einem der Ansprüche 1 bis 8, **dadurch gekennzeichnet, dass** die Zentraleinheit (2) eine Vorrichtung für eine Pulsfrequenz-Messung aufweist.

10. Trainingsvorrichtung nach einem der Ansprüche 1 bis 9, **dadurch gekennzeichnet, dass** das Pad (13) mindestens einen Sensor (34) für eine Pulsmessung aufweist.

11. Verfahren zur Durchführung einer realitätsnahen Gefechtssituation mit einer Trainingsvorrichtung (1) mit lasergestützter Waffe bestehend aus einer Zentraleinheit (2), mindestens einer Empfangseinheit (8), einer Lasereinheit (9), sowie mindestens einem personengetragenen, mit Reizstrom (43) bestrombaren Pad (9), wobei die Lasereinheit (9) eines ersten Trainierenden (11) an einer ersten Waffe (27) angeordnet ist und ein Lasersignal (28) in Richtung einer Empfangseinheit (8) eines zweiten Trainierenden (12) aussendet, wobei bei einem Erkennen des Lasersignals (28) durch die Empfangseinheit (8) dies von der Zentraleinheit (2) als Treffer gewertet wird, und die Zentraleinheit (2) mindestens einen Stromimpuls an das mindestens eine Pad (13) sendet, **dadurch gekennzeichnet, dass** bei einem erkannten Treffer das Pad (13) einen wellenartig variierenden Reizstrom (43) abgibt, welcher beim Trainierenden einen muskulär kontrahierenden Schmerz bewirkt.
